# EUROPÄISCHE PATENTSCHRIFT

(11) **EP 1 163 460 B1**
(45) Veröffentlichungstag und Bekanntmachung des Hinweises auf die Patenterteilung: **17.07.2002**
(21) Anmeldenummer: 00910849.9
(22) Anmeldetag: 16.03.2000
(51) Int. Cl.: F16H 3/66

(54) **AUTOMATISCH SCHALTBARES KRAFTFAHRZEUGGETRIEBE**
AUTOMATIC TRANSMISSION FOR MOTOR VEHICLES
BOITE DE VITESSES AUTOMATIQUE POUR VEHICULE

(30) Priorität: 22.03.1999 DE 19912480
(43) Veröffentlichungstag der Anmeldung: 19.12.2001
(73) Patentinhaber: ZF FRIEDRICHSHAFEN Aktiengesellschaft, 88038 Friedrichshafen (DE)
(72) Erfinder: KORKMAZ, Bülent, D-78073 Bad Dürrheim (DE); KUHN, Walter, D-88045 Friedrichshafen (DE); DOMIAN, Hans-Jörg, D-88090 Immenstaad (DE); DRERUP, Bernhard, D-88079 Kressbronn (DE); GUMPOLTSBERGER, Gerhard, D-88045 Friedrichshafen (DE)
(86) Internationale Anmeldenummer: EP0002337
(87) Internationale Veröffentlichungsnummer: WO0057082

(56) Entgegenhaltungen:
- EP-A- 0 719 961
- DE-A- 3 825 733
- US-A- 5 295 924
- US-A- 5 435 792
- US-A- 5 460 579
- PATENT ABSTRACTS OF JAPAN vol. 1996, no. 12, 26. Dezember 1996 (1996-12-26) & JP 08 200456 A (JATCO CORP), 6. August 1996 (1996-08-06) & JP 08 200456 A (JATCO) 6. August 1996 (1996-08-06)
- PATENT ABSTRACTS OF JAPAN vol. 017, no. 096 (M-1372), 25. Februar 1993 (1993-02-25) & JP 04 290649 A (NISSAN MOTOR CO LTD;OTHERS: 01), 15. Oktober 1992 (1992-10-15) & JP 04 290649 A (NISSAN) 15. Oktober 1992 (1992-10-15)

## Beschreibung

Die vorliegende Erfindung betrifft ein automatisch schaltbares Kraftfahrzeuggetriebe mit drei Einsteg-Planetensätzen sowie drei Bremsen und zwei Kupplungen zum Schalten von sechs Vorwärtsgängen und einem Rückwärtsgang sowie mit einer Antriebs- und einer Abtriebswelle. Ein gattungsgemäßes Getriebe ist aus der DE-A-3825733 bekannt.

Ein weiteres Planetengetriebe ist beispielsweise aus der US 4,070,927 bekannt, wobei die Anzahl der zur Verfügung stehenden Vorwärtsgänge jeweils um eins größer ist als die Anzahl der Reibelemente. Jeder Gangwechsel zwischen den Vorwärtsgängen wird dadurch erreicht, daß jeweils eines der Reibelemente zu- bzw. abgeschaltet wird.

Automatisch schaltbare Fahrzeuggetriebe in Planetenbauweise im allgemeinen sind im Stand der Technik bereits vielfach beschrieben und unterliegen einer permanenten Weiterentwicklung und Verbesserung. So sollen diese Getriebe eine ausreichende Anzahl von Vorwärtsgängen sowie einen Rückwärtsgang und eine für Kraftfahrzeuge sehr gut geeignete Übersetzung mit einer hohen Gesamtspreizung sowie günstigen Stufensprüngen aufweisen. Ferner sollen diese eine hohe Anfahrübersetzung in Vorwärtsrichtung ermöglichen und einen direkten Gang enthalten sowie für den Einsatz sowohl in Pkw als auch Nkw geeignet sein. Außerdem sollen diese Getriebe einen geringen Bauaufwand, insbesondere eine geringe Anzahl an Schaltelementen erfordern und bei sequentieller Schaltweise Doppelschaltungen vermeiden, so daß bei Schaltungen in definierten Ganggruppen jeweils nur ein Schaltelement gewechselt wird.

Aufgabe der vorliegenden Erfindung ist es, ein neuartiges und verbessertes Getriebe anzugeben, welches bekannte Nachteile vermeidet, die oben genannten Anforderungen erfüllt und eine beliebige Ausbildung und Anordnung eines Anfahrelements sowie des Antriebs und des Abtriebs ermöglicht.

Erfindungsgemäß wird diese Aufgabe durch ein automatisch schaltbares Kraftfahrzeuggetriebe der eingangs genannaten Art mit den Merkmalen des Anspruchs 1 gelöst.

Damit ist ein automatisch schaltbares Fahrzeuggetriebe mit sechs Vorwärtsgängen und einem Rückwärtsgang angegeben, welches vorteilhafterweise für Kraftfahrzeuge sehr gut geeignete Übersetzungen mit einer hohen Gesamtspreizung und günstigen Stufensprüngen sowie einer hohen Anfahrübersetzung in Vorwärtsrichtung aufweist. Ferner ist der fünfte Gang ein direkter Gang. Ein derartiges Getriebe ist sowohl für Pkw als auch für Nkw geeignet und zeichnet sich durch einen geringen Bauaufwand, d. h. zwei Kupplungen und drei Bremsen, aus, wobei bei sequentieller Schaltweise Doppelschaltungen vermieden werden und somit bei jeder beliebigen Schaltung innerhalb einer Gruppe von Gängen jeweils nur zwei Schaltelemente gewechselt werden.

In einer Weiterbildung ist der Steg des ersten Planetensatzes ist mit dem Hohlrad des dritten Planetensatzes und das Hohlrad des zweiten Planetensatzes mit dem Steg des dritten Planetensatzes ständig in Verbindung. Eine derartige Ausbildung ist besonders für eine koaxiale Anordnung von An- und Abtriebswellen geeignet.

In einer Weiterbildung der Erfindung wird vorgeschlagen, daß die erste Kupplung in dem dritten und fünften Gang sowie in dem Rückwärtsgang betätigt wird und daß die zweite Kupplung im vierten, fünften und sechsten Gang betätigt wird.

Die erste Bremse wird in dem zweiten und sechsten Gang, die zweite Bremse im ersten und in dem Rückwärtsgang und die dritte Bremse in dem ersten, zweiten, dritten sowie vierten Gang betätigt. Damit wird vorteilhafterweise erreicht, daß jeweils nur ein Schaltelement bei jeder beliebigen Schaltung zwischen dem ersten und vierten Gang, zwischen dem dritten und fünften Gang und zwischen dem vierten und sechsten Gang gewechselt wird. Somit werden bei sequentieller Schaltweise Doppelschaltungen vorteilhafterweise vermieden.

Weitere Ziele, Merkmale, Vorteile und Anwendungsmöglichkeiten ergeben sich aus der nachfolgenden Beschreibung der Ausführungsbeispiele, die in den Zeichnungen näher dargestellt sind, jedoch nicht vollumfänglich unter den Wortlauf des Patentbegehrens fallen.

Es zeigen:
- Fig. 1: ein Getriebe mit koaxialem An- und Abtrieb nach einer ersten Version in schematischer Darstellung;
- Fig. 2: ein Getriebe mit koaxialem An- und Abtrieb nach einer zweiten Version in schematischer Darstellung und nach der Erfindung;
- Fig. 3: ein Getriebe nach erster Version mit Antrieb auf der Abtriebsseite in schematischer Darstellung;
- Fig. 4: ein Getriebe nach erster Version mit Abtrieb zwischen den Planetensätzen und den Kupplungen in schematischer Darstellung;
- Fig. 5: ein Getriebe nach erster Version mit Drehmomentwandler für eine Standard-Getriebeanordnung in schematischer Darstellung;
- Fig. 6: ein Getriebe nach erster Version, jedoch in spiegelbildlicher Anordnung mit integrierter Anfahrbremse für eine Front-Quer-Anordnung im Pkw in schematischer Darstellung;
- Fig. 7 bis 9: beispielhafte Übersetzungsreihen für ein Getriebe nach Fig. 1 und
- Fig. 10 und 11: beispielhafte Übersetzungsreihen für ein Getriebe nach Fig. 2 sowie
- Fig. 12: ein Schaltschema für ein erfindungsgemäßes Getriebe.

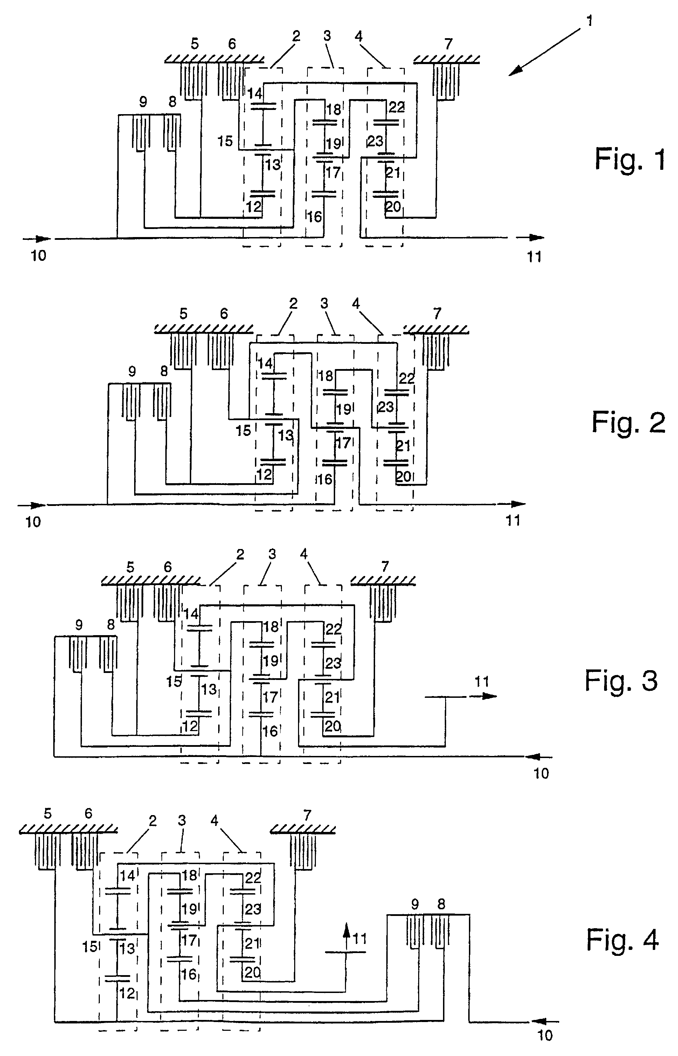

Ein Getriebe 1 (Fig. 1) besteht im wesentlichen aus den Einsteg-Planetensätzen 2, 3, 4 sowie den Bremsen 5, 6, 7 und den beiden Kupplungen 8 und 9. Die Planetensätze bestehen jeweils aus einem Sonnenrad, einem Steg mit Planetenrädern sowie einem Hohlrad, welche im wesentlichen in zwei unterschiedlichen Versionen ausgebildet sein können. In einer ersten Version sind die Planetensätze wie folgt miteinander verbunden: Die Antriebswelle 10 ist ständig verbunden mit dem Sonnenrad 16 des zweiten Planetensatzes. Die Antriebswelle 10 ist ferner über die erste Kupplung 8 mit dem Sonnenrad 12 des ersten Planetensatzes 2 sowie über die zweite Kupplung 9 mit dem Steg des ersten Planetensatzes 2 sowie dem Hohlrad 18 des Planetensatzes 3 verbindbar. Die Antriebswelle 10 ist koaxial zur Abtriebswelle 11 angeordnet.

Das Hohlrad 14 des ersten Planetensatzes 2 ist mit dem Steg 23 des dritten Planetensatzes 4 und dieser wiederum mit der Abtriebswelle 11 ständig in Verbindung. Das Sonnenrad 12 des ersten Planetensatzes ist über die erste Bremse 5, der Steg 15 des ersten Planetensatzes 2 sowie das Hohlrad 18 des zweiten Planetensatzes 3 ist über die zweite Bremse 6 und das Sonnenrad 20 des dritten Planetensatzes 4 ist über die dritte Bremse 7 am Gehäuse festbremsbar.

Gleiche Bauteile in unterschiedlichen Figuren oder Bauteile mit den gleichen Funktionen sind in den Figuren mit den selben Bezugszeichen versehen.

In einer weiteren Ausbildung gemäß zweiter Version des Getriebes (Fig. 2) nach der Erfindung mit ebenfalls koaxialem An- und Abtrieb 10, 11 sind die Planetensätze 2, 3, 4, die Bremsen 5, 6, 7 sowie die Kupplungen 8 und 9 im wesentlichen gleich angeordnet, wie bereits in der Fig. 1 gezeigt. Diese zweite Version unterscheidet sich jedoch von der ersten Version in der Verbindung der einzelnen Bauteile der Planetensätze miteinander.

So sind die Sonnenräder 12 und 16 des ersten und zweiten Planetensatzes ebenfalls mit der Antriebswelle 10 verbindbar bzw. in ständiger Antriebsverbindung. Die Abtriebswelle 11 dagegen ist mit dem Steg 19 des zweiten Planetensatzes 3 und dieser wiederum mit dem Hohlrad 14 des ersten Planetensatzes 2 in ständiger Verbindung. Der Steg 15 des ersten Planetensatzes ist ferner mit dem Hohlrad 22 des dritten Planetensatzes 4 und das Hohlrad 18 des zweiten Planetensatzes 3 mit dem Steg 23 des dritten Planetensatzes 4 in ständiger Verbindung. Der Steg 15 sowie das Hohlrad 22 sind somit durch die Bremse 6 und das Sonnenrad 20 über die Bremse 7 an dem Gehäuse feststellbar.

Die Getriebeausbildung gemäß Darstellung in Fig. 3 entspricht im wesentlichen der ersten Version in Fig. 1, wobei jedoch alternativ der Antrieb 10 und der Abtrieb 11 auf derselben Seite des Getriebes vorgesehen sind.

Eine weitere alternative Getriebeanordnung ist in Fig. 4 gezeigt, wobei der Antrieb über die Antriebswelle 10 auf das Sonnenrad 16 und über die Kupplungen 8 und 9 auf das Sonnenrad 12 sowie den Steg 15 bzw. das Hohlrad 18 erfolgt. Der Abtrieb 11 ist im Getriebe zwischen den Planetensätzen 2, 3, 4 sowie den Kupplungen 8 und 9 angeordnet.

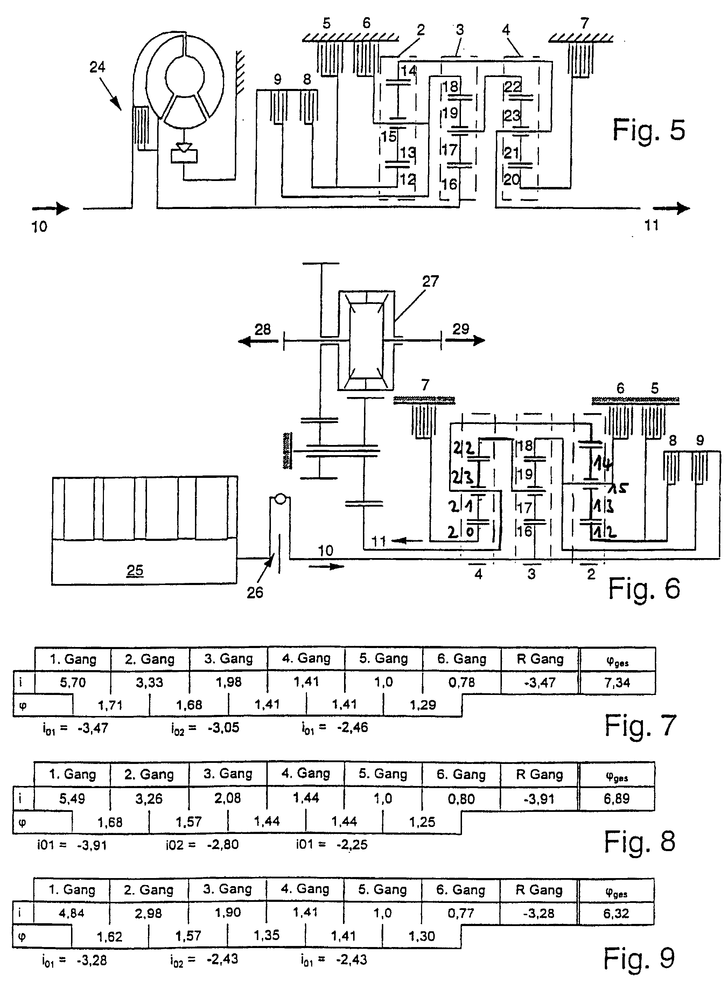

Eine Weiterbildung der Getriebeanordnung gemäß erster Version (Fig. 5) sieht vor, daß der Antrieb über einen Drehmomentwandler 24 erfolgt und das Turbinenrad des Wandlers 24 direkt mit dem Sonnenrad 16 des zweiten Planetensatzes 3 bzw. über die Kupplungen 8 und 9 mit dem ersten bzw. zweiten Planetensatz 2, 3 verbindbar ist.

Eine weitere alternative Ausbildungsform des Getriebes mit einer integrierten Anfahrbremse für eine Front-Quer-Anordnung in einem Pkw ist in Fig. 6 dargestellt. Das Getriebe entspricht dabei einer spiegelbildlichen Ausbildung der ersten Version des Getriebes gemäß Fig. 1, wobei jedoch die Antriebs- und Abtriebswellen 10 und 11 auf derselben Seite angeordnet sind. Zusätzlich befindet sich zwischen einem Verbrennungsmotor 25 und der Antriebswelle 10 ein Torsionsschwingungsdämpfer 26. Die Abtriebswelle 11 ist über eine weitere Übersetzungsstufe und ein Differential 27 mit den Antriebsrädern 28 und 29 verbunden.

Den beispielhaften Übersetzungsreihen (Fig. 7 bis 9) für das Getriebe gemäß Fig. 1 ist zu entnehmen, daß die Übersetzung i im ersten Gang zwischen 4,84 und 5,70 und der Gesamtstufensprung ϕ_ges zwischen 6,32 und 7,34 liegt. Die Übersetzung i im fünften Gang ist jeweils 1,00.

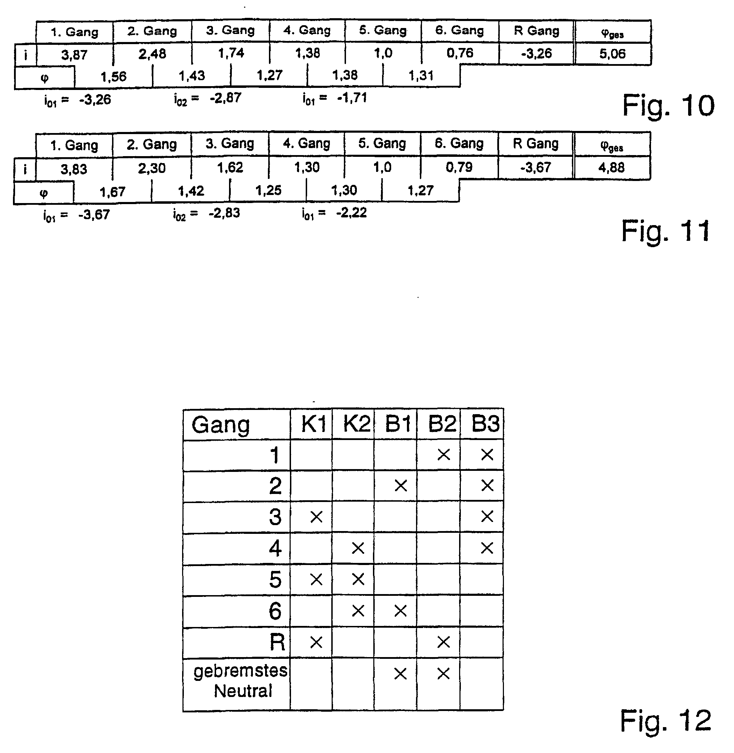

Die beiden beispielhaften Übersetzungsreihen (Fig. 10 und 11) für ein Getriebe gemäß Fig. 2 nach der Erfindung weisen eine Übersetzung i im ersten Gang von 3,83 bzw. 3,87 bei einem Gesamtstufensprung ϕ_ges von 4,88 bis 5,06 auf. Die Übersetzung i im fünften Gang beträgt ebenfalls 1,00. Der fünfte Gang ist bei allen Übersetzungsreihen vorteilhafterweise als direkter Gang ausgebildet.

Dem Schaltschema gemäß der Darstellung in Fig. 12 ist zu entnehmen, daß bei sequentieller Schaltweise Doppelschaltungen vermieden werden, da zwei benachbarte Gangstufen jeweils ein Schaltelement gemeinsam benutzen. Dem Schaltschema ist ferner zu entnehmen, daß bei jeder beliebigen Schaltung zwischen dem ersten und vierten Gang sowie zwischen dem vierten und sechsten Gang jeweils nur ein Schaltelement betätigt wird. Die Schaltposition gebremstes Neutral ist durch Betätigung der Bremsen B1 und B2 möglich, wodurch ein Blockieren des Abtriebs und eine gleichzeitig definierte Drehzahl im Getriebe, evtl. für eine Hillholder-Funktion, erreicht werden.

Zusätzlich können Freiläufe an jeder Stelle des Getriebes eingesetzt werden, so z. B. zwischen der Welle und dem Gehäuse bzw. zwischen zwei Wellen, um eine Welle in zwei zu trennen. Eine Neutralstellung kann durch Schließen eines Schaltelements und Öffnen eines anderen Schaltelements verwirklicht werden, z. B. durch Schließen der ersten Bremse 5 und Öffnen der zweiten Bremse 6 für eine Neutralstellung Vorwärts.

Ferner kann die Antriebswelle 10 durch ein Kupplungselement vom Motor getrennt werden, wobei das Kupplungselement beispielsweise als trockene oder nasse Anfahrkupplung, als Magnetpulverkupplung, als Fliehkraftkupplung, als hydrodynamische Kupplung oder ähnliche ausgebildet sein kann.

Weiterhin kann die Antriebswelle 10 auch durch ein Wandlungselement vom Motor getrennt werden, wobei dieses als hydrodynamischer Wandler, als Differentialwandler, als Anfahrretarder, als hydrostatisches Getriebe, als elektrisches Getriebe oder als elektro-mechanisches Getriebe oder ähnliches ausgebildet sein kann. Dies bedeutet, daß zwischen Motor und Getriebe eine zusätzliche Übersetzungsstufe mit einer konstanten oder auch einer variablen Übersetzung größer oder gleich eins vorgesehen werden kann.

Alternativ kann ein Anfahrelement auch hinter dem Getriebe angeordnet sein, so daß die Antriebswelle 10 fest mit der Koppelwelle eines Motors verbunden ist. In einem solchen Fall erfolgt das Anfahren durch ein Schaltelement des Getriebes, z. B. mittels der zweiten Bremse 6.

Ferner kann eine verschleißfreie Bremse, beispielsweise ein hydraulischer oder elektrischer Retarder oder ähnliches, auf jeder Welle, bevorzugt jedoch auf der Antriebswelle 10 oder der Abtriebswelle 11, angeordnet sein.

Weiter kann ein Nebenabtrieb zum Antrieb von zusätzlichen Aggregaten auf jeder Welle, bevorzugt aber auf der Antriebswelle 10 oder der Abtriebswelle 11, vorgesehen sein.

Die Schaltelemente selbst bestehen vorzugsweise aus lastschaltenden Kupplungen oder Bremsen, wie Lamellenkupplungen, Bandbremsen, Konuskupplungen oder ähnliche.

Die Schaltelemente können jedoch auch aus formschlüssigen Kupplungen oder Bremsen bestehen, beispielsweise Klauenkupplungen oder Synchronisierungen.

## Patentansprüche

1. Automatisch schaltbares Kraftfahrzeuggetriebe (1) mit drei Einsteg-Planetensätzen (2, 3, 4), wobei der erste Satz eingangsseitig, der dritte Satz ausgangsseitig und der zweite Satz zwischen dem ersten und dem zweiten Satz angeordnet ist, sowie drei Bremsen (5, 6, 7) und zwei Kupplungen (8, 9) zum Schalten von sechs Vorwärtsgängen und einem Rückwärtsgang, mit einer Antriebswelle (10) und einer Abtriebswelle (11) mit der folgenden Kombination:
- die Antriebswelle (10) ist direkt mit dem Sonnenrad (16) des zweiten Planetensatzes (3) verbunden und
- die Antriebswelle (10) ist über die erste Kupplung (8) mit dem Sonnenrad (12) des ersten Planetensatzes (2) und über die zweite Kupplung (9) mit dem Steg (15) des ersten Planetensatzes (2) und
- das Sonnenrad (12) des ersten Planetensatzes (2) ist über die erste Bremse (5) mit dem Gehäuse des Getriebes (1) und
- der Steg (15) des ersten Planetensatzes (2) ist über die zweite Bremse (6) mit dem Gehäuse und
- das Sonnenrad (20) des dritten Planetensatzes (4) ist über die dritte Bremse (7) mit dem Gehäuse verbindbar,
**dadurch gekennzeichnet, daß** die Abtriebswelle (11) mit dem Steg (19) des zweiten Planetensatzes (3) und mit dem Hohlrad (14) des ersten Planetensatzes (2) ständig verbunden ist.

2. Automatisch schaltbares Kraftfahrzeuggetriebe nach Anspruch 1, **dadurch gekennzeichnet, daß** der Steg (15) des ersten Planetensatzes (2) mit dem Hohlrad (22) des dritten Planetensatzes (4) und das Hohlrad (18) des zweiten Planetensatzes (3) mit dem Steg (23) des dritten Planetensatzes (4) ständig verbunden ist.

3. Automatisch schaltbares Kraftfahrzeuggetriebe nach einem der vorangehenden Ansprüche, **dadurch gekennzeichnet, daß** die erste Kupplung (8) in dem dritten und fünften Gang sowie in dem Rückwärtsgang betätigt wird.

4. Automatisch schaltbares Kraftfahrzeuggetriebe nach einem der vorangehenden Ansprüche, **dadurch gekennzeichnet, daß** die zweite Kupplung (9) in dem vierten, fünften und sechsten Gang betätigt wird.

5. Automatisch schaltbares Kraftfahrzeuggetriebe nach einem der vorangehenden Ansprüche, **dadurch gekennzeichnet, daß** die erste Bremse (5) in dem zweiten und sechsten Gang betätigt wird.

6. Automatisch schaltbares Kraftfahrzeuggetriebe nach einem der vorangehenden Ansprüche, **dadurch gekennzeichnet, daß** die zweite Bremse (6) in dem ersten Gang und in dem Rückwärtsgang betätigt wird.

7. Automatisch schaltbares Kraftfahrzeuggetriebe nach einem der vorangehenden Ansprüche, **dadurch gekennzeichnet, daß** die dritte Bremse (7) in dem ersten, zweiten, dritten und vierten Gang betätigt wird.

## Claims

1. Automatic transmission (1) for motor vehicles, with three single-arm planetary gear sets (2, 3, 4), wherein the first set is disposed on the input side, the third set is disposed on the output side and the second set is disposed between the first and the second set, as well as three brakes (5, 6, 7) and two clutches (8, 9) for engaging six forward gears and a reverse gear, with a drive shaft (10) and a driven shaft (11), with the following combination:
- the drive shaft (10) is connected directly to the sun wheel (16) of the second planetary gear set (3) and
- the drive shaft (10) can be connected via the first clutch (8) to the sun wheel (12) of the first planetary gear set (2) and via the second clutch (9) to the arm (15) of the first planetary gear set (2) and
- the sun wheel (12) of the first planetary gear set (2) can be connected via the first brake (5) to the casing of the transmission (1) and
- the arm (15) of the first planetary gear set (2) can be connected via the second brake (6) to the casing and
- the sun wheel (20) of the third planetary gear set (4) can be connected via the third brake (7) to the casing,
**characterised in that** the driven shaft (11) is permanently connected to the arm (19) of the second planetary gear set (3) and to the ring gear (14) of the first planetary gear set (2).

2. Automatic transmission for motor vehicles according to Claim 1, **characterised in that** the arm (15) of the first planetary gear set (2) is permanently connected to the ring gear (22) of the third planetary gear set (4), and the ring gear (18) of the second planetary gear set (3) is permanently connected to the arm (23) of the third planetary gear set (4).

3. Automatic transmission for motor vehicles according to either of the preceding Claims, **characterised in that** the first clutch (8) is operated in third and fifth gear and in reverse gear.

4. Automatic transmission for motor vehicles according to any one of the preceding Claims, **characterised in that** the second clutch (9) is operated in fourth, fifth and sixth gear.

5. Automatic transmission for motor vehicles according to any one of the preceding Claims, **characterised in that** the first brake (5) is operated in second and sixth gear.

6. Automatic transmission for motor vehicles according to any one of the preceding Claims, **characterised in that** the second brake (6) is operated in first gear and in reverse gear.

7. Automatic transmission for motor vehicles according to any one of the preceding Claims, **characterised in that** the third brake (7) is operated in first, second, third and fourth gear.

## Revendications

1. Boîte de vitesses (1) pour véhicule automobile à changement de rapport automatique, comprenant trois trains épicycloïdaux (2, 3, 4) comportant un porte-satellites, le premier train étant disposé côté entrée, le troisième train côté sortie et le deuxième train entre le premier train et le troisième train, ainsi que trois freins (5, 6, 7) et deux embrayages (8, 9) destinés à enclencher six vitesses de marche avant et une vitesse de marche arrière, un arbre d'entrée (10) et un arbre de sortie (11), dans la combinaison suivante :
- l'arbre d'entrée (10) est relié directement à la roue planétaire (16) du deuxième train épicycloïdal (3),
- l'arbre d'entrée (10) peut être relié à la roue planétaire (12) du premier train épicycloïdal (2) par l'intermédiaire du premier embrayage (8) et au porte-satellites (15) du premier train épicycloïdal (2) par l'intermédiaire du deuxième embrayage (9),
- la roue planétaire (12) du premier train épicycloïdal (2) peut être reliée au carter de la boîte de vitesses (1) par l'intermédiaire du premier frein (5),
- le porte-satellites (15) du premier train épicycloïdal (2) peut être relié au carter par l'intermédiaire du deuxième frein (6), et
- la roue planétaire (20) du troisième train épicycloïdal (4) peut être reliée au carter par l'intermédiaire du troisième frein (7),
**caractérisée en ce que** l'arbre de sortie (11) est relié en permanence au porte-satellites (19) du deuxième train épicycloïdal (3) et à la couronne à denture intérieure (14) du premier train épicycloïdal (2).

2. Boîte de vitesses pour véhicule automobile à changement de rapport automatique selon la revendication 1, **caractérisée en ce que** le porte-satellites (15) du premier train épicycloïdal (2) est relié en permanence à la couronne à denture intérieure (22) du troisième train épicycloïdal (4) et la couronne à denture intérieure (18) du deuxième train épicycloïdal (3) est reliée en permanence au porte-satellites (23) du troisième train épicycloïdal (4).

3. Boîte de vitesses pour véhicule automobile à changement de rapport automatique selon l'une des revendications précédentes, **caractérisée en ce que** le premier embrayage (8) est actionné dans la troisième et la cinquième vitesse ainsi que dans la vitesse de marche arrière.

4. Boîte de vitesses pour véhicule automobile à changement de rapport automatique selon l'une des revendications précédentes, **caractérisée en ce que** le deuxième embrayage (9) est actionné dans la quatrième, la cinquième et la sixième vitesse.

5. Boîte de vitesses pour véhicule automobile à changement de rapport automatique selon l'une des revendications précédentes, **caractérisée en ce que** le premier frein (5) est actionné dans la deuxième et la sixième vitesse.

6. Boîte de vitesses pour véhicule automobile à changement de rapport automatique selon l'une des revendications précédentes, **caractérisée en ce que** le deuxième frein (6) est actionné dans la première vitesse et la vitesse de marche arrière.

7. Boîte de vitesses pour véhicule automobile à changement de rapport automatique selon l'une des revendications précédentes, **caractérisée en ce que** le troisième frein (7) est actionné dans la première, la deuxième, la troisième et la quatrième vitesse.
